(19) **Europäisches Patentamt**

**European Patent Office**

**Office européen des brevets**

(11) **EP 1 083 195 A1**

(12) **EUROPEAN PATENT APPLICATION**

(43) Date of publication:
14.03.2001 Bulletin 2001/11

(51) Int. Cl.[7]: **C08G 77/06**, C08G 77/42

(21) Application number: **00119645.0**

(22) Date of filing: **08.09.2000**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI** | (72) Inventors:<br>• **Vincent, Gary Allen**<br>  **Midland, Michigan 48640 (US)**<br>• **Tonge, James Steven**<br>  **Sanford, Michigan 48657 (US)** |
| (30) Priority: **08.09.1999 US 391567** | (74) Representative:<br>**Sternagel, Fleischer, Godemeyer & Partner Patentanwälte**<br>**Braunsberger Feld 29**<br>**51429 Bergisch Gladbach (DE)** |
| (71) Applicant:<br>**DOW CORNING CORPORATION**<br>**Midland Michigan 48686-0994 (US)** | |

(54) **Methods of making alkoxylated resin-polymer organosilicone networks and products obtainable therefrom**

(57)    A method of making an alkoxylated resin-polymer organosilicone network is disclosed comprising (I) reacting a mixture containing (A)(i) at least one silicone polymer containing at least two hydroxy groups, (A)(ii) at least one organic polymer containing at least two hydroxy groups, or (A)(iii) a mixture of (A)(i) and (A)(ii), (B) an MQ organosilicone resin, (C) at least one alkoxysilane, and (D) a catalytic amount of a basic catalyst, and (II) adding (E) a neutralizing agent to the product of (I). The alkoxylated resin-polymer organosilicone networks of this invention are useful in bakeware coatings, anti-graffitti coatings, fouling release coatings, architectural coatings, sealants, electronic potting, encapsulation and as components in silicone adhesives and in radiation curable compositions.

EP 1 083 195 A1

Printed by Xerox (UK) Business Services
2.16.7 (HRS)/3.6

**Description**

This invention provides methods of making alkoxylated resin-polymer organosilicone networks by reacting a mixture comprising at least one silicone polymer containing at least two hydroxy groups, at least one organic polymer containing at least two hydroxy groups, or a mixture thereof, an MQ organosilicone resin, at least one alkoxysilane, and a catalytic amount of a basic catalyst, and then adding a neutralizing agent to the product thereof.

MQ organosilicone resins may be produced by the methods disclosed in U.S. Patent 2,676,182. The MQ resins are produced by the acid hydrolysis of a silicate, which is subsequently end-capped by reaction with a trialkylhalosilane or hexamethyldisiloxane. Thus, the MQ resins can be described by the empirical formula:

$$[R_3SiO_{1/2}]_a[R_2SiO_{2/2}]_b[RSiO_{3/2}]_c[SiO_{4/2}]_d$$

wherein R is a methyl or OH group and a, b, c and d are zero or positive numerical values with the provisos that $a + b + c + d = 1$, $0 \leq (b + c) \leq 0.2$ and the ratio of a: (b+c+d) is between 0.3 and 1.0.

Most often, the MQ resins have a number average molecular weight, Mn, between 2,200 and 7,000 and are generally sold in solution. When the Mn is less than 2,200, the resins retain the characteristics of a liquid, regardless of whether or not they are removed from solution. When the Mn is greater than 7,000, the resins are relatively insoluble in the preferred aromatic solvents. Likewise, when the ratio of a: (b+c+d) is less than 0.3, the Mn is generally greater than 7,000 and when the ratio is greater than 1.0, the Mn is generally less than 2,200.

Those skilled in the art will appreciate that end-capping a silicate hydrolyzate with a trialkylhalosilane or hexamethyldisiloxane renders a resin which has a substantial quantity of residual -OH groups associated therewith (often termed residual silanol.) Such residual silanol groups are properly designated as T units. It is known in the art to lower amount of residual silanol by further reaction of the resin with hexamethyldisilazane. Thus, as used herein, the term "MQ resin" also includes resins having either substantial residual silanol groups or reduced residual silanol.

It is also known that, of the residual silanol groups associated with MQ silicone resins, only a portion thereof are considered to be non-sterically hindered and thus capable of further reaction. Prior art methods have thus been limited in that the degree of alkoxy functionality which can be obtained thereby is determined by the concentration of non-sterically hindered residual silanol.

MQ resins made generally in accordance with the teachings of Daudt et al. are frequently described as being "benzene soluble." In reality, such resins are also soluble in a number of aromatic solvents, including xylene and toluene. It is, however, also known to provide MQ resins in the form of spray-dried powders, as taught in US Patent 5,324,806.

MQ resins have a variety of uses. They are frequently blended with silicone fluids in the manufacture of silicone pressure sensitive adhesives and rubbers. In such manufacture, it is known to cross-link the silicone fluids and resin with a cross-linking compound reacts with functional groups associated with both the resin and fluid. Often the non-sterically hindered residual silanol groups associated with the resin serve as the functional groups. It is also known, however, to introduce functional groups, for example vinyl, by treating the resin with dimethylvinyl-chlorosilane.

Because of their versatile reactivity, alkoxylated organosilicone resins, whether or not they meet the definition of an MQ resin, are particularly useful as intermediate materials in the synthesis of silicone end-products, such as the aforementioned pressure sensitive adhesives.

Alkoxy functionality has been imparted to MQ resins by reacting the resin with an alcohol in the presence of a catalyst, such as tetrabutyl titanate. However, alkoxylation by this process is somewhat limited in that the degree of alkoxylation which can be achieved is only 5 to 6 mole percent. It is believed that this limit is due to the competing reaction involving intramolecular condensation of alkoxy sites.

The introduction of alkoxy functionality to MQ resins has been achieved via two other well-known methods which utilize reactions between alkoxysilanes and the non-sterically hindered residual silanol groups on the resin. Those skilled in the art will recognize that the two reactions are generally referred to as condensation and exchange, respectively. In the condensation reaction, an alcohol is produced in the formation of the Si-O-Si bond between the resin and silane. In the exchange reaction a direct substitution of the alkoxy group on the silane and the hydroxy group on the resin occurs. Both reactions are generally carried out in the presence of a catalyst, such as tetrabutyl titanate. The drawback of either approach is again the limited degree of alkoxylation which may be achieved.

U.S. Patent 5,837,784 discloses alkoxylated organosilicone resins which are made by reacting an MQ resin with alkoxysilanes in the presence of a catalytic amount of a base catalyst. It is further disclosed that the alkoxysilanes may include numerous organo groups such as alkyl, alkenyl, aryl, arylalkyl, epoxy, ether, alkylamide, alkylamine which are also incorporated into the structure of the alkoxylated organosilicone resin so-made. However, nowhere is it disclosed that silicone polymer containing at least two hydroxy groups, at least one organic polymer containing at least two hydroxy groups, or mixtures thereof can be used in the process of this invention.

The reaction of carboxy functional acrylates with epoxy functional silicones has been disclosed. For example, U.S. Patent 4,558,082 discloses a process for making acrylic functional polysiloxane compositions comprising reacting an epoxy functional siloxane with acrylic acid, substituted acrylic acid, or mixture thereof in the presence of a catalyst selected from tetraalkylurea, tetraalkylguanidine or mixtures thereof.

Thus, it would be highly desirable to provide a process for incorporating alkoxy functionality into an organosilicone resin-polymer network, wherein the degree of alkoxylation of the resin-polymer network was not limited.

Our invention provides methods of making alkoxylated resin-polymer organosilicone networks and to products produced therefrom.

It is therefore an object of the present invention to provide a method making an alkoxylated organosilicone resin-polymer network wherein a higher degree of alkoxylation, as compared to prior art methods, can be obtained.

Still another object of the present invention is to provide a method for making an alkoxylated organosilicone resin-polymer network which can utilize an MQ resin, a silicone polymer containing at least two hydroxy groups, at least one organic polymer containing at least two hydroxy groups, or a mixture thereof, and an alkoxysilane.

It is a feature of the method of the present invention that additional desirable organic groups, may be incorporated into the alkoxylated organosilicone resin-polymer network of the invention along with alkoxy groups.

It is yet another feature of the method of the invention that the number average molecular weight, Mn, and weight average molecular weight, Mw, of the alkoxylated organosilicone resin-polymer network of the invention may be less than that of the starting MQ resin.

In a first embodiment, this invention provides a method of making an alkoxylated resin-polymer organosilicone network comprising: (I) reacting a mixture containing (A) a component selected from (A) (i) at least one silicone polymer containing at least two hydroxy groups, (A) (ii) at least one organic polymer containing at least two hydroxy groups, and (A) (iii) a mixture of (A) (i) and (A) (ii), (B) an MQ organosilicone resin, (C) at least one alkoxysilane, and (D) a catalytic amount of a basic catalyst, and (II) adding (E) a neutralizing agent to the product of (I).

As used herein, the term "resin-polymer" describes a silicone composition wherein the molecular structure is arranged in both a three dimensional network and contains linear structure, and denotes a globular resin species wherein hydric polymeric species are attached to either form a graft or link to an adjacent resin particle.

"Reacting" for the purposes of this invention denotes simply mixing the ingredients including and any optional ingredients, or heating a mixture of the ingredients and any optional ingredients at temperatures above room temperature, preferably at temperatures above 50°C., and more preferably at temperatures from 50-150°C.

The silicone polymer of Component (A) (i) contains at least 2 hydroxy groups, but can contain 3 hydroxy groups (a triol) or more, and can be linear, branched, cyclic and combinations thereof with a linear structure being preferred. Component (A) (i) is preferably a hydroxy-terminated polydiorganosiloxane. The organo substituent is a monovalent hydrocarbon group having from 1 to 20 carbon atoms and the viscosity of the hydroxy-terminated polydiorganosiloxane is typically from 10 to 60,000 $mm^2$/s. The monovalent hydrocarbon group is exemplified by alkyl groups such as methyl, ethyl, propyl, butyl, hexyl, octyl and decyl, cycloaliphatic groups such as cyclohexyl, aryl groups such as phenyl, tolyl and xylyl, aralkyl groups such as benzyl and phenylethyl and olefinic hydrocarbon groups such as vinyl, allyl, methallyl, butenyl and hexenyl, octenyl, cyclohexenyl and styryl. Alkenyl groups are preferably terminally unsaturated. It is highly preferred that the organo substituent is methyl. The monovalent hydrocarbon group can also be any monovalent hydrocarbon group noted above which has at least one of its hydrogen atoms replaced with a halogen, such as fluorine, chlorine or bromine, and these monovalent hydrocarbon groups are exemplified by $CF_3CH_2CH_2$- and $C_4F_9CH_2CH_2$-. Each organo substituent can be the same or different, as desired. Preferably, Component (A) (i) is a hydroxy-terminated polydimethylsiloxane having the formula HO-$(Me_2SiO)_n$-H wherein Me denotes methyl and n has a value such that the viscosity of the hydroxy-terminated polydimethylsiloxane is from 10 to 60,000 $mm^2$/s.

A combination of two or more different types of silicone polymers containing at least two -OH groups can also be used as Component (A) (i). Thus Component (A) (i) can comprise a combination of at least 2 hydroxy-terminated polydimethylsiloxanes having viscosities of from 10 to 60,000 $mm^2$/s. When a combination of two or more hydroxy-terminated polydimethylsiloxanes are used, they may be in the form of a mixture or may be included as separate components.

The organic polymer of Component (A) (ii) contains at least 2 hydroxy groups, but can contain 3 hydroxy groups (a triol) or more, and can be linear, branched, cyclic and combinations thereof with a linear structure being preferred. Component (A) (ii) is exemplified by polybutylene glycol, polypropylene glycol, polyethylene glycol-propylene glycol copolymers and polyethylene glycol-polybutylene glycol copolymers. Preferably, Component (A) (ii) is polybutylene glycol.

Component (A) can also be a mixture of (A) (i) and (A) (ii). The silicone polymers of (A) (i) and organic polymers of (A) (ii) are as described hereinabove including preferred embodiments thereof. If a mixture of (A) (i) and (A) (ii) is used, it can be generally used in a weight ratio of (A) (i) to (A) (ii) of from 1:99 to 99:1, depending on what application the alkoxylated resin-polymer organosilicone network is used in.

For purposes of this invention, from 1 to 99 wt% of component (A) can be used, said wt% being based on the total weight of the formulation.

The silicone resins of Component (B) are macromolecular polymers consisting essentially of $R_3SiO_{1/2}$ (M) and $SiO_{4/2}$ (Q) units, wherein R is a functional or nonfunctional organic group. Such units are conventionally called M and Q units, respectively. Those skilled in the art will appreciate that such resins may also include a limited number of $R_2SiO_{2/2}$ and $RSiO_{3/2}$ siloxy units, conventionally referred to as D and T units, respectively. Generally speaking, the term "MQ resin" is used to describe organosilicone resins wherein the quantity of T and D units does not, on average, exceed 20 mole percent. Thus, organosilicone resins that primarily consist essentially of M and Q units are frequently referred to as MQ resins.

In the method of the invention, preferably Component (B) is an MQ organosilicone resin having the empirical formula

$$[R_3SiO_{1/2}]_a[R_2SiO_{2/2}]_b[RSiO_{3/2}]_c[SiO_{4/2}]_d$$

wherein each R is independently a methyl group or a hydroxyl group, and a, b, c and d are zero or positive numerical values with the provisos that $a + b + c + d = 1$, $0 \leq (b + c) \leq 0.2$ and the ratio of a: (b+c+d) is from 0.3:1 to 1:1.

As previously mentioned, MQ resins may contain a limited number of D and T units. Thus, the value of parameters a, b, c and d are limited as set forth above such that the number of D and T units does not exceed 20 percent of the number of siloxy units.

Furthermore, the above limitations dictate that the number of M units must be greater than at least 0.3 of the sum of the number of D, T and Q units. The ratio of M units to the sum of D, T and Q units is inversely proportional to the molecular weight of the resin. Thus, when the ratio of M:(D+T+Q) is greater than 1:1, the MQ resin behaves more as a liquid than a solid. Hence, when that ratio is in excess of 1:1, Mn of the resin is generally less than 2,200. Conversely, when that ratio is less than 0.3, Mn generally exceeds 7,700 and the resin looses its solubility in aromatic solvents.

For purposes of this invention from 1 to 99 wt% of the MQ organosilicone resin (B) can be used, said wt% being based on the total weight of the formulation.

Component (C) of the invention is at least one alkoxysilane. The alkoxysilane is exemplified by a compound having the empirical formula

$$R^1{}_xSi(OR^2)_{(4-x)}$$

wherein x is 1, 2 or 3, $R^1$ is independently selected from alkyl groups, alkenyl groups, aryl groups, arylalkyl groups, epoxy containing groups, ether groups, alkylamide groups, alkylamine groups, acryloxy groups and methacryloxy groups, and $R^2$ is an alkyl group having from 1 to 6 carbon atoms. Because of availability, cost and reactivity, methoxy silanes and ethoxy silanes are the most preferred.

It is important to note that Component (C) does not include tetra alkoxysilanes. It was found that when a pure tetra alkoxysilane, such as tetra methoxy silane, was reacted with the MQ resins of Component (B) in the presence of (D) a basic catalyst, the system had a tendency to produce an intractable precipitate. It is speculated that the use of tetra alkoxysilanes promotes intermolecular condensation and linkage, lead to insoluble high molecular weights. Those skilled in the art will recognize, however, that the use of a limited amount of a tetra alkoxysilane in combination with either mono-, di-, or trialkoxysilanes is not specifically excluded in the practice of the present invention, except to the extent that such inclusion leads to an unacceptable quantity of intractable precipitate.

It is also important to note that Component (C), the alkoxysilane, can be used to introduce other group groups, in addition to alkoxy groups, into the structure of the MQ resin. Thus groups that are independently selected from alkyl, alkenyl, aryl, arylalkyl, epoxy, ether, alkylamide, alkylamine can be incorporated into the MQ resin.

The alkyl groups of $R^1$ are exemplified by methyl, ethyl, propyl, butyl, pentyl, hexyl, octyl, decyl, dodecyl and octadecyl. The alkenyl groups of $R^1$ are exemplified by vinyl, allyl, propenyl, butenyl, pentenyl and hexenyl. The aryl groups of $R^1$ are exemplified by phenyl, tolyl and xylyl. The aralkyl groups of $R^1$ are exemplified by benzyl and phenylethyl.

The epoxy containing groups of $R^1$ are exemplified by 1,2-epoxyethyl, 2,3-epoxypropyl, 3,4-epoxybutyl, 5,6-epoxyhexyl, 9.10-epoxydecyl, glycidoxymethyl, alpha-glycidoxyethyl, beta-glycidoxyethyl, alpha-glycidoxypropyl, beta-glycidoxypropyl, gamma-glycidoxypropyl, 2-(3,4-epoxycyclohexyl)ethyl, 3-(3,4-epoxycyclohexyl)propyl and 3,4-epoxycyclohexylbutyl.

The ether groups of $R^1$ are exemplified by a group having the formula $-R^3OR^4$ wherein $R^3$ is an alkylene group such as ethylene, propylene, butylene, pentylene, trimethylene, 2-methyltrimethylene, pentamethylene, hexamethylene, 3 -ethyl-hexamethylene, octamethylene, decamethylene, $-CH_2(CH_3)CH-$, $-CH_2CH(CH_3)CH_2-$ or $-(CH_2)_{18}-$, a cycloalkylene group such as cyclohexylene, an arylene group such as phenylene, or a combination of divalent hydrocarbon groups such as benzylene. Examples of suitable alkylene groups also include any alkylene group wherein one or more hydrogen atoms have been replaced by halogen, such as fluorine, chlorine or bromine exemplified by -

$CH_2CH_2CF_2CF_2CH_2CH_2$-. Preferably, $R^3$ is an alkylene group. $R^4$ is an alkyl group such as methyl, ethyl, propyl, butyl, hexyl, octyl or decyl, a cycloaliphatic group such as cyclohexyl, an aryl group such as phenyl, tolyl, or xylyl, an aralkyl group such as benzyl or phenylethyl, or an alkenyl group such as vinyl, allyl, methallyl, butenyl, hexenyl, octenyl, cyclohexenyl or styryl. The alkenyl groups are preferably terminally unsaturated. $R^4$ can also be an alkyl group noted above which has at least one of its hydrogen atoms replaced with a halogen, such as fluorine, chlorine or bromine, and these monovalent hydrocarbon groups are exemplified by $CF_3CH_2CH_2$- and $C_4F_9CH_2CH_2$-. Preferably $R^4$ is an alkyl group or an alkenyl group.

The alkylamine groups of $R^1$ are exemplified by aminoethyl and aminoethylaminopropyl.

The acryloxy groups are exemplified by gamma-acryloxymethyl, gamma-acryloxyethyl and gamma-acryloxypropyl. The methacryloxy groups are exemplified by gamma-methacryloxymethyl, gamma-methacryloxyethyl, and gamma-methacryloxypropyl, with gamma-acryloxypropyl and gamma-methacryloxypropyl being preferred.

The alkyl groups of $R^2$ are exemplified by methyl, ethyl, propyl, butyl, pentyl and hexyl, with methyl being preferred.

Particularly preferred alkoxysilanes for Component (C) include methyltrimethoxysilane, dimethyldimethoxysilane, phenyltrimethoxysilane, gamma-glycidoxypropyltrimethoxysilane, 2-(3,4-epoxycyclohexyl) ethyltrimethoxysilane and aminoethylaminopropyltrimethoxysilane.

Component (C) can also be a combination of two or more of any of the above described alkoxysilanes. Preferred combinations are exemplified by a combination of methyltrimethoxysilane and dimethyldimethoxysilane, a combination of methyltrimethoxysilane and aminoethylaminopropyltrimethoxysilane, or a combination of methyltrimethoxysilane and 2-(3,4-epoxycyclohexyl)-ethyltrimethoxysilane.

For purposes of this invention from 1 to 99 wt% of the alkoxysilane (C) can be used, said wt% being based on the total weight of the formulation.

With regard to the amounts of Components (A), (B) and (C), one skilled in the art can by routine experimentation by varying the weight percentages of Components (A), (B) and (C), arrive at materials useful in applications other than those described herein in the examples.

Component (D) of the invention comprises a catalytic amount of a basic catalyst. Suitable basic catalysts include but are not limited to NaOH, KOH, $NaOCH_3$, LiOH, potassium tertiary butoxide, $LiOCH_3$, $KOCH_3$, sodium silanolate and amines such as ethanolamine, tetrabutylammonium fluoride. It should be noted that amines will serve to catalyze the reaction of the invention, but at a considerably slower rate when compared to the remaining aforementioned basic catalysts.

As used herein, the term "catalytic amount" is such an amount of catalyst that causes the reaction of the invention to proceed at a predetermined desired rate. The catalytic amount of catalyst will, of course, depend upon the type of basic catalyst, as some are more effective than others. It is preferred for purposes of this invention that from 0.001 to 10.0 wt% of the basic catalyst (D) be used, and it is highly preferred that from 0.01 to 1.0 wt% be used, said wt% being based on the total weight of the formulation.

In the preferred embodiment of the invention, the reacting step (I) is carried out under conditions of reflux. While it is known that the reaction will proceed at room temperature conditions, it is well known in the art that reaction rates are accelerated at elevated temperatures. The MQ resin, as dissolved in an aromatic solvent, may be directly reacted. In one embodiment of the invention, a volatile trap is employed which then substantially separates the aromatic solvent and alcohols (whether intentionally introduced or generated during reaction) from the alkoxylated resin.

The neutralizing step (II) is easily carried out by the addition of (E) a neutralizing agent such as an acid, exemplified by acetic acid, to the reaction mixture, after the reacting step (I). Solid carbon dioxide is particularly useful in this regard as any excess will simply leave the reaction mixture in the form of vapor. Other useful neutralizing agents include acetic acid and chlorosilanes. A sufficient amount of Component (E), the neutralizing agent, must be added to insure the base is completely neutralized. Generally, a 100% excess of neutralizing agent, preferably acetic acid, is added.

The method of this invention can further comprise adding a curing catalyst to the product of Step (II). The curing catalyst is preferably selected from organotin compounds, organotitanate compounds and chelated titanium compounds. The organotin compounds are exemplified by stannous carboxylates and diorganotin dicarboxylates. The stannous carboxylates are exemplified by stannous octoate, stannous 2-ethylhexoate, stannous neodecanoate, stannous isooctanoate, stannous isodecanoate and stannous 2,2-dimethyldecanoate. The diorganotin dicarboxylates are exemplified by dibutyltin diacetate, dibutyltin dilaurate, dibutyltin dioctoate and dimethyltin dilaurate.

The organotitanate compounds are exemplified by tetraalkyltitanates such as tetrabutyltitanate, tetraisopropyltitanate, tetramethyltitanate and tetraoctyltitanate. The chelated titanium compounds are exemplified diisopropoxy titanium bis-(ethylacetoacetonate), diisopropoxy titanium bis-(methyl acetoacetonate), diisopropoxy titanium bis-(acetylacetonate), dibutoxy titanium bis-(ethyl acetoacetonate) and dimethoxy titanium bis-(methyl acetoacetonate). Preferably the curing catalyst is a tetraalkyltitanate, and especially preferred is tetrabutyltitanate.

It is preferred for purposes of this invention that from 0.001 to 10.0 weight parts of the curing catalyst be used per 100 weight parts of Components (A)+(B)+(C)+(D)+(E) , and it is highly preferred that from 0.5 to 5.0 weight parts be used per 100 weight parts of Components (A)+(B)+(C)+(D)+(E) .

The method of this invention can further comprise adding an adhesion promoter to the product of Step (II). The adhesion promoters are exemplified by epoxysilanes such as gamma-glycidoxypropyltrimethoxysilane, a product obtained by reacting a mixture comprising aminopropyltrimethoxysilane, gamma-glycidoxypropyltrimethoxysilane, and methyltrimethoxysilane, and a combination of an epoxysilane such as gamma-glycidoxypropyltrimethoxysilane and a hydroxyl-endblocked polymethylvinylsiloxane.

The adhesion promoter can be added at any time after Step (II), and can be added without the curing catalyst, before or after adding the curing catalyst, or can be added as a mixture of curing catalyst and adhesion promoter.

It is preferred for purposes of this invention that from 0.5 to 10.0 weight parts of the adhesion promoter be used per 100 weight parts of Components (A)+(B)+(C)+(D)+(E) , and it is highly preferred that from 1.0 to 5.0 weight parts be used per 100 weight parts of Components (A)+(B)+(C)+(D)+(E) .

When Component (C) is an alkyl functional trialkoxysilane exemplified by methyltrimethoxysilane, the method of this invention can further comprise reacting the product of Step (II) with a mono-organic alcohol in the presence of a transesterification catalyst. The mono-organic alcohols are exemplified by hydroxyalkylvinylethers and hydroxyalkylacrylates. The hydroxyalkylvinylethers are exemplified by hydroxyethylvinylethers, hydroxybutylvinylethers and hydroxylhexylvinylethers and the hydroxyalkylacrylates are exemplified by hydroxymethacrylates, hydroxyethylacrylates, hydroxyethylmethacrylates, hydroxypropylacrylates, hydroxypropylmethacrylates, propylene glycol monomethacrylates and hydroxybutylacrylates. Preferably the mono-organic alcohol is selected from the group consisting of 4-hydroxybutyl-vinylether and 4-hydroxybutylacrylate, with 4-hydroxybutylvinylether being especially preferred.

The transesterification catalyst is preferably selected from organotin compounds, organotitanate compounds and chelated titanium compounds. The organotin compounds are exemplified by stannous carboxylates and diorganotin dicarboxylates. The stannous carboxylates are exemplified by stannous octoate, stannous 2-ethylhexoate, stannous neodecanoate, stannous isooctanoate, stannous isodecanoate and stannous 2,2-dimethyldecanoate. The diorganotin dicarboxylates are exemplified by dibutyltin diacetate, dibutyltin dilaurate, dibutyltin dioctoate and dimethyltin dilaurate.

The organotitanate compounds are exemplified by tetraalkyltitanates such as tetrabutyltitanate, tetraisopropyltitanate, tetramethyltitanate and tetraoctyltitanate.

The chelated titanium compounds are exemplified by diisopropoxy titanium bis-(ethylacetoacetonate), diisopropoxy titanium bis-(methyl acetoacetonate), diisopropoxy titanium bis-(acetylacetonate), dibutoxy titanium bis-(ethyl acetoacetonate) and dimethoxy titanium bis-(methyl acetoacetonate). Preferably the transesterification catalyst is a tetraalkyltitanate, and especially preferred is tetrabutyltitanate.

The mono-organic alcohol can be part of the mixture of Step (I), or can be added after Step (I) but before the transesterification catalyst, or can be added after adding the transesterification catalyst, or can be added as a mixture of transesterification catalyst and mono-organic alcohol.

It is preferred for purposes of this invention that from 5.0 to 30 weight parts of the mono-organic alcohol compound be used per 100 weight parts of Components (A)+(B)+(C)+(D)+(E) , and it is highly preferred that from 10 to 20 weight parts be used per 100 weight parts of Components (A)+(B)+(C)+(D)+(E) .

It is preferred for purposes of this invention that from 0.001 to 10.0 weight parts of the transesterification catalyst be used per 100 weight parts of Components (A)+(B)+(C)+(D)+(E) , and it is highly preferred that from 0.5 to 5.0 weight parts be used per 100 weight parts of Components (A)+(B)+(C)+(D)+(E) .

When Component (C) is an epoxy functional alkoxysilane, the method of this invention can further comprise reacting the product of (II) with a mixture comprising (a) an organic acid exemplified by unsaturated carboxylic acids such as acrylic acid, methacrylic acid, itaconic acid, maleic acid, furmaric acid and (b) a basic catalyst as described above, including preferred embodiments thereof. This mixture can further comprise a solvent such as toluene and a stabilizer such as phenothiazine. Preferably Component (a) is acrylic acid or methacrylic acid. Preferably, Component (a) is present in the mixture from 1 to 10 weight parts per 100 parts of the product of (II), and Component (b) is present in the mixture from 0.01 to 10 weight parts per 100 weight parts of the product of (II) preferably 1 parts per 100 parts of the product of (II).

In a second embodiment, this invention also relates to a method of making an alkoxylated resin-polymer organosilicone network comprising: (I) reacting a mixture comprising: (A) a Component selected from (A) (i) at least one silicone polymer containing at least two hydroxy groups, (A) (ii) at least one organic polymer containing at least two hydroxy groups, and (A) (iii) a mixture of (A) (i) and (A) (ii), (C) at least one alkoxysilane, and (D) a catalytic amount of a basic catalyst, (II) reacting the product of (I) with (B) an MQ organosilicone resin, and (III) adding (E) a neutralizing agent to the product of (II).

The silicone polymer, organic polymer, alkoxysilane, basic catalyst, MQ organosilicone resin and neutralizing agent are as described hereinabove, including preferred embodiments and amounts thereof.

In a third embodiment, this invention also relates to a method of making an alkoxylated resin-polymer organosilicone network comprising (I) reacting a mixture comprising (C) at least one alkoxysilane, (D) a catalytic amount of a basic catalyst and (B) an MQ organosilicone resin, (II) adding (E) a neutralizing agent to the product of (I), and (III) adding (A) a Component selected from the group consisting of (A) (i) at least one silicone polymer containing at least two hydroxy groups, (A) (ii) at least one organic polymer containing at least two hydroxy groups, and (A) (iii) a mixture of (A) (i) and (A) (ii) to the product of (II).

The alkoxysilane, basic catalyst, MQ organosilicone resin, neutralizing agent, silicone polymer and organic polymer are as described hereinabove, including preferred embodiments and amounts thereof.

The alkoxylated resin-polymer organosilicone networks of this invention have a variety of uses. They can be used in, for example, bakeware coatings, anti-graffitti coatings, fouling release coatings, architectural coatings, sealants, electronic potting and encapsulation. They can be used in the preparation of silicone adhesives, in the preparation of rubbers, and are particularly useful in radiation curable compositions when epoxy, vinyl ether, acrylate or methacrylate functionality is present on the silane during the reaction. These epoxy functional-, alkenyloxy functional- or acryloxy functional-alkoxylated resin-polymer organosilicone networks can then be combined with a photoinitiator to produce radiation curable silicone compositions.

Polymer 1 denotes a hydroxy-terminated polydimethylsiloxane polymer having a viscosity of 55,000 $mm^2$/s at 25°C.
Polymer 2 denotes a hydroxy-terminated polydimethylsiloxane polymer having a viscosity of 50,000 mPa•s at 25°C.
Polymer 3 denotes a hydroxy-terminated polydimethylsiloxane polymer having a viscosity of 2,000 $mm^2$/s at 25°C.
Polymer 4 denotes a hydroxy-terminated polydimethylsiloxane polymer having a viscosity of 100 $mm^2$/s at 25°C.
Polymer 5 denotes a hydroxy-terminated polydimethylsiloxane polymer having a viscosity of 75 $mm^2$/s at 25°C.
Polymer 6 denotes a hydroxy-terminated polydimethylsiloxane polymer having a viscosity of 41 $mm^2$/s at 25°C.
Resin 1 denotes a 72 wt% xylene solution of an MQ organosilicone resin consisting essentially of $(CH_3)_3SiO_{1/2}$ units and $SiO_2$ units in a molar ratio of 0.75:1.
Resin 2 denotes a 61.6 wt% xylene solution of an MQ organosilicone resin consisting essentially of $(CH_3)_3SiO_{1/2}$ units and $SiO_2$ units in a molar ratio of 0.65:1
Resin 3 denotes a 74 wt% xylene solution of an MQ organosilicone resin consisting essentially of $(CH_3)_3SiO_{1/2}$ units and $SiO_2$ units in a molar ratio of 0.75:1.

Epoxysilane denotes 2-(3,4-epoxycyclohexyl)-ethyltrimethoxysilane (Silquest™ A 186 Silane available from OSi Specialties, Danbury, Conn.).

MTM denotes methyltrimethoxysilane.
NaOMe denotes sodium methoxide.
Adhesion Promoter denotes an adhesion promoter which was prepared by reacting a mixture comprising an aminopropyltrimethoxysilane, a glycidoxypropyltrimethoxysilane and MTM.

Example 1

In a three neck round bottom flask equipped with a stirrer and Dean-Stark trap was added 416 g of Resin 1, 162 g of Polymer 1, 110 g of MTM and 6 g of a catalyst solution made from 25g of 1-amino-2-propanol, 0.5g of NaOMe and 4.5 g dry methanol. This solution was heated at 105-110°C. for two hours. During this period 28.1g of volatiles were collected in the Dean Stark trap. A piece of solid $CO_2$ was added to neutralize the base. The reaction product was devolatilized at 150°C. for 1 hour at 5-10 mm Hg. To the devolatilized liquid a solution of 3 g of tetrabutyltitanate (denoted hereinafter as TBT) and 3 g of Adhesion Promoter was added. At 150°C. the product poured much like water. Tensile Adhesion (TA) test samples were made from this adhesive and polypropylene, polycarbonate and glass. The samples were tested 40 days after being prepared. The test samples contain a ¼ x ¼ x 2 inch piece of adhesive bonding two 1 x 3 inch pieces of substrate.

Example 2

The same experimental conditions as those used in Example 1 were used except 406 g of Resin 2, 150 g Polymer 1, 40 g MTM and 6 g of the amine/NaOMe catalyst solution described in Example 1 were used. The reaction was heated at 105°C. for one hour while 6 g of volatiles were collected. A solution of 1.5 g of TBT and 1.5 g of the adhesion promoter from Example 1 were added. Tensile Adhesion (TA) test samples were prepared and tested after 36 days. The results from Examples 1 and 2 are shown in Table 1 hereinbelow.

Table 1

| Substrate | TA values (kPa) | |
|---|---|---|
| | Example 1 | Example 2 |
| Glass | 2309 | 703 |
| Polycarbonate | 2502 | 696 |
| Polypropylene | 655 | 662 |
| * all glass pieces broke under test # cohesive failure | | |

Example 3

The same experimental conditions as those used in Example 1 were used except that 208 g of Resin 1, 81g of Polymer 2, 80 g of PhSi(OMe)$_3$, 0.5g of 10% NaOMe in dry methanol were heated at 100°C. for 45 min. The reaction was heated at 105°C. for 1 hr. while 8.5 ml of volatiles were collected. A piece of solid $CO_2$ was added prior to devolatilization at 150°C. for 1 hr. at 5-10 mm Hg. A solution of 1.5 g TBT and 1.5g of the adhesion promoter from Example 1 were added. TA test samples were prepared and tested after 38 days. The product was low viscosity and milky white at 150°C.

| Substrate | TA values (kPa) |
|---|---|
| Glass | 827 |
| Polycarbonate | 848 |
| Polypropylene | 972 |
| All TA samples failed cohesively. | |

Example 4

The same experimental conditions as those used in Example 1 were used except that 416 g of Resin 1, 15g Polymer 2, 80 g Me$_2$Si(OMe)$_2$, 1g of 10% NaOMe in dry methanol and then were heated at 100°C. for 1 hr. At this time 75 g of MTM and 128 g of Polymer 1 were added. The reaction was heated at 100°C. for 1 hour. 1 g of NaOMe was added half way through the reaction period. At the end of one hour, 50 g more of MTM was added with heating for a further 30 minutes. A piece of solid $CO_2$ was added prior to devolatilization at 150°C. for 1 hour at 5 -10 mm Hg. A solution of 3 g TBT was added, TA test samples were prepared and tested after 38days.

| Substrate | TA values (kPa) |
|---|---|
| Glass | 813 |
| Polycarbonate | 262 |
| Polypropylene | 765 |
| All samples failed cohesively | |

Example 5

In the same experimental equipment as Example 1, 403 g of Resin 3 were added to 50 g of MTM with 1 g of 25 wt% NaOMe, and heated at 100°C. for 1 hour. At this point the catalyst was quenched with a piece of solid $CO_2$.

To this solution, 0.5 g of Adhesion Promoter, and 180 g of Polymer 1 were added. The solution was then devolatilized to give a liquid of viscosity of 12,000 $mm^2$/s as determined by Dynamic Mechanical Analysis (DMA).

Example 6

The same experimental equipment and product ratios to that in Example 5 were used here, except that Polymer 1 was added in two increments, 90 g during the digestion process and 90 g after quenching the catalyst with solid $CO_2$. After devolatilization, a material of 11,000 $mm^2$/s was obtained by DMA.

Example 7

Example 5 was repeated with the exception that the resin/silane digestion process was carried for 17 hours prior to the quenching and addition of Polymer 1. On devolatilization the material had a viscosity of 7,000 $mm^2$/s by DMA.

Example 8

A solution of 403g of Resin 3 and 50g MTM were heated at 100°C. then combined with 2.5 ml of 1 molar K-t-OBu in t-BuOH. Heating at 100°C. continued for 1 hour as 17 g of volatiles were collected. A piece of $CO_2$ was added, 0.5g aminopropanol and 180 g Polymer 1 were added. Devolatilization at 150°C./1hr/5mmHg was successful. A solution of 3g of TBT and 3 g of Adhesion Promoter was then added. The cured product was softer and more tacky than equivalent NaOMe product.

Example 9

One hundred grams of MTM, 403 g of Resin 3 and 1 g of a 10% solution of LiOH H2O in methanol was heated at 100°C. for 1 hour under a Dean Stark trap, 23g of volatiles were collected. A piece of $CO_2$ was added and 0.5 g of aminopropanol and 180 g of Polymer 1 were added. A solution of 3g of TBT and 3 g of Adhesion Promoter were then added at 150°C., the resulting adhesive was very viscous but pourable, it had a much higher viscosity than the NaOMe equivalent materials.

Example 10

The materials in Table 2 were produced using the experimental set up used in Example 1, all materials were added and heated at 70°C. for 1 hour. The solution was then neutralized with acetic acid, filtered and devolatilized at 150°C. for 1 hour at 5 mm Hg. The amount of each material used in grains is denoted in Table 2.

Table 2

| Example | Resin 3 | Polymer 6 | Polymer 5 | MTM | NaOMe |
|---------|---------|-----------|-----------|-----|-------|
| 10A | 175 | 25 | 25 | 100 | 3.5 |
| 10B | 175 | 50 | | 100 | 3.5 |
| 10C | 175 | 75 | | 100 | 3.5 |
| 10D | 175 | 100 | | 100 | 3.5 |
| 10E | 175 | 150 | | 100 | 3.5 |
| 10F | 175 | 200 | | 100 | 3.5 |

Example 11

To 100g of Polymer 5, 30 g of Resin 3 and 2 g of 25 wt% NaOMe in methanol was added. To this was added a 1:1 mole ratio solution of hexamethyldisiloxane and MTM which had been previously mixed with acid to give a partial trimethylsilyl capped MTM species. Lastly, 10g of aminoethylaminopropyltrimethoxysilane was added and the mixture heated to 80°C. On heating, the cloudy mix clears leaving homogenous liquid. The catalyst was quenched with 1 g of acetic acid before being filtered and stripped to leave a low viscosity amino functional resin.

Example 12

Several epoxy resin polymer networks were produced by mixing Resin 3, Epoxysilane, at least one hydroxyl-terminated polydimethylsiloxane polymer and 2g of 25 % NaOMe in methanol at levels listed in Table 3 to a 3 necked round bottom flask equipped with a stirrer and reflux condenser. The mixtures were heated at 80°C. for 4 hours prior to the addition of 1g of acetic acid. The liquid was then filtered and stripped at 150°C. for 1 hour at 5mm Hg. The viscosity of the final product is listed in Table 3.

Table 3

| Example | Resin (g) | Polymer type | Polymer (g) | Epoxy Silane (g) | Viscosity mm$^2$/s |
|---|---|---|---|---|---|
| 12A | 25 | 5/4 | 25/25 | 75 | 385 |
| 12B | 25 | 6/4 | 25/25 | 75 | 1428 |
| 12C | 15 | 6/5/4 | 2.5/66.25/21.25 | 15 | 654 |
| 12D | 15 | 6/5/4 | 10/40/40 | 15 | 1204 |
| 12E | 15 | 6/5 | 10/80 | 17 | 466 |
| 12F | 15 | 6/5 | 10/80 | 23 | 193 |

Example 13

The same experimental procedure as Example 12 was used except 50g of Resin 3, 50g of Polymer 4, 25g of the Epoxysilane, and 50g of MTM were used yielding a material having a viscosity of 49 mm$^2$/s.

Example 14

Materials suitable for radiation curing where prepared via two distinct methods. In Examples 14A, 14B, and 14C, at least one hydroxyl-terminated polydimethylsiloxane polymer, Resin 3, MTM and 0.2pts NaOMe in methanol were heated at 80°C. for 3 hours. The resulting resin-polymer network was neutralized with 0.1 parts of acetic acid. The methoxy functionality on the resin polymer network was then reacted in a transesterification reaction with HBVE (hydroxybutylvinylether) using 100 ppm tetrabutyl titanate(TBT). Example 14D is distinct in that at least one hydroxyl-terminated polydimethylsiloxane polymer, Resin 3, MTM and HBVE where combined in one pot and 0.1 parts of NaOMe in methanol was used to both digest the resin, condense the SiOH and transesterify the alcohol. All samples were vacuum stripped to greater than 98.5 % non volatile content at 150°C. and 5mm Hg vacuum. The amount of Resin, MTM, Polymer type, Polymer amount and HBVE amount are shown in Table 4.

Table 4

| Example | Resin 3 (g) | MTM (g) | Polymer types | Polymer (g) | HBVE (g) | Sequential |
|---|---|---|---|---|---|---|
| 14A | 50 | 100 | Polymer 3 | 100 | 50 | YES |
| 14B | 25 | 100 | Polymers 5/6 | 100/100 | 50 | YES |
| 14C | 50 | 100 | Polymer 3/6 | 10/90 | 50 | YES |
| 14D | 50 | 100 | Polymer 5/6 | 50/50 | 50 | NO |

Example 15

In all the previous examples the linear polymer of the resin-polymer network was provided by varying the molecular weight of hydroxy-terminated polydimethylsiloxane polymers, it is however possible to use organic diols to replace the PDMS polymer to produce resin polymer networks. Table X shows the type and amount of materials used in producing epoxy functional resin-organic polymer networks. The same procedure was used in each example, organic diol, epoxysilane and 0.2 parts of 25% NaOMe in methanol were heated at 80°C. for 30 minutes, at this time 8 grams of Resin 3 was added and heated a further 4 hours at 80°C. The solution was neutralized with 0.1 parts of acetic acid, filtered and vacuum stripped. The results are shown in Table X.

Table X

| Ex. | Organic Type | Organic diol (g) | Resin 3 (g) | Epoxy -silane (g) | Description |
|-----|--------------|------------------|-------------|-------------------|-------------|
| 15A | Polypropylene glycol (2000 mw) | 45 | 8 | 10 | gelled |
| 15B | Polybutylene glycol (1000 mw) | 45 | 8 | 10 | fluid |
| 15C | Polybutylene glycol (2000 mw) | 45 | 8 | 10 | fluid |
| 15D | Polyethylene glycol (3400 mw) | 45 | 8 | 10 | solid |

Example 16

An acrylate composition was prepared by mixing 100g of the organosilicone network of Example 12F with 10 g of acrylic acid and 1 g of tetramethylguanidine(TMGA). This mixture was heated in 100g of toluene for 16 hours at 100°C. The sample gelled.

A second acrylate composition was prepared by using trifluoromethane sulfonic acid as a catalyst instead of TMGA. An acrylate composition was prepared by mixing 100 g of Example 12F with 5g of acrylic acid and 0.1 g of trifluoromethane sulfonic acid then heating this mixture at 80°C. for 16 hours. This sample also resulted in a gel.

A silicone acrylate was obtained by mixing 100 g of Example 12F with 5 g of acrylic acid and 0.1 g of tetrabutylammonium fluoride (catalyst) in 100 g of toluene containing 200 ppm of phenothiazine (a stabilizer for acrylates) in methanol. The mixture was heated at 80°C. for 16 hours, prior to stripping on a rotovap at 80°C. and 10 mm Hg. Next, a radiation curable silicone composition containing 98 wt% of the silicone acrylate prepared above and 2 wt% Darocure® 1173 (2-hydroxy-2-methyl-1-phenyl-propan-1-one from Ciba Geigy, Terrytown, N.Y.) was cured to a solid coating on a paper substrate when passed beneath a Fusion H bulb UV lamp.

**Claims**

1.  A method of making an alkoxylated resin-polymer organosilicone network comprising:

    (I) reacting a mixture containing:

        (A) a Component selected from
        (A)(i) at least one silicone polymer containing at least two hydroxy groups;
        (A)(ii) at least one organic polymer containing at least two hydroxy groups; and
        (A)(iii) a mixture of (A)(i) and (A)(ii);
        (B) an MQ organosilicone resin;
        (C) at least one alkoxysilane;
        (D) a catalytic amount of a basic catalyst; and

    (II) adding (E) a neutralizing agent to the product of (I).

2.  A method according to claim 1 wherein the method further comprises adding a curing catalyst to the product of Step (II).

3.  A method according to claims 1 or 2 wherein the method further comprises adding an adhesion promoter to the product of Step (II).

4.  A method according to claim 1 where (C) is methyltrimethoxysilane and wherein the method further comprises reacting the product of Step (II) with a mono-organic alcohol selected from 4-hydroxybutylvinylether or 4-hydroxybutylacrylate in the presence of a transesterification catalyst.

5.  A method of making an alkoxylated resin-polymer organosilicone network comprising:

    (I) reacting a mixture comprising:

        (A) a Component selected from

(A)(i) at least one silicone polymer containing at least two hydroxy groups;

(A)(ii) at least one organic polymer containing at least two hydroxy groups; and

(A)(iii) a mixture of (A)(i) and (A)(ii);

(C) at least one alkoxysilane;

(D) a catalytic amount of a basic catalyst;

(II) reacting the product of (I) with (B) an MQ organosilicone resin; and

(III) adding (E) a neutralizing agent to the product of (II).

6. A method of making an alkoxylated resin-polymer organosilicone network comprising:

(I) reacting a mixture comprising:

(C) at least one alkoxysilane;

(D) a catalytic amount of a basic catalyst;

(B) an MQ organosilicone resin;

(II) adding (E) a neutralizing agent to the product of (I); and

(III) adding

(A) a Component selected from

(A)(i) at least one silicone polymer containing at least two hydroxy groups;

(A)(ii) at least one organic polymer containing at least two hydroxy groups; and

(A)(iii) a mixture of (A)(i) and (A)(ii) to the product of (II).

7. A method according to any of claims 1 to 6 wherein Component (A) is Component (A)(i) and Component (A)(i) is at least one hydroxy-terminated polydimethylsiloxane having the formula $HO\text{-}(Me_2SiO)_n\text{-}H$ wherein Me denotes methyl and n has a value such that the viscosity of the hydroxy-terminated polydimethylsiloxane is from 10 to 60,000 $mm^2/s$.

8. A method according to any of claims 1 to 6 wherein Component (A) is Component (A)(ii) and Component (A)(ii) is selected from polybutylene glycol, polypropylene glycol, polyethylene glycol-propylene glycol copolymers and polyethylene glycol-polybutylene glycol copolymers.

9. A method according to any of claims 1 to 8 wherein (B) is an MQ organosilicone resin having the empirical formula

$$[R_3SiO_{1/2}]_a[R_2SiO_{2/2}]_b[RSiO_{3/2}]_c[SiO_{4/2}]_d$$

wherein each R is independently a methyl group or a hydroxyl group, and a, b, c and d are zero or positive numerical values with the provisos that $a + b + c + d = 1$, $0 \leq (b + c) \leq 0.2$, and the ratio of a:(b+c+d) is from 0.3:1 to 1:1.

10. A method according to any of claims 1 to 9 wherein (C) is a compound having the empirical formula $R^1_x Si(OR^2)_{(4-x)}$ wherein x is 1, 2 or 3, $R^1$ is independently selected from alkyl groups, alkenyl groups. aryl groups, arylalkyl groups, epoxy containing groups, ether groups, alkylamide groups, alkylamine groups, acryloxy groups and methacryloxy groups and $R^2$ is an alkyl group having from 1 to 6 carbon atoms.

11. A method according to claim 10 wherein (C) is selected from methyltrimethoxysilane, dimethyldimethoxysilane, phenyltrimethoxysilane, gamma-glycidoxypropyltrimethoxysilane, 2-(3,4-epoxycyclohexyl)ethyltrimethoxysilane and aminoethylaminopropyltrimethoxysilane.

12. A method according to claim 10 wherein (C) is selected from a combination of methyltrimethoxysilane and dimethyldimethoxysilane, a combination of methyltrimethoxysilane and aminoethylaminopropyl-trimethoxysilane and a combination of methyltrimethoxy-silane and 2-(3,4-epoxycyclohexyl)ethyltrimethoxysilane.

13. A method according to any of claims 1 to 12 wherein (D) is selected from NaOH, KOH, $NaOCH_3$, LiOH, potassium tertiary butoxide, $LiOCH_3$, $KOCH_3$, sodium silanolate, ethanolamine and tetrabutylammonium fluoride.

14. An alkoxylated resin-polymer organosilicone network obtainable by the method according to any of claims 1 to 13.

**European Patent Office**

**EUROPEAN SEARCH REPORT**

Application Number

EP 00 11 9645

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,A | US 5 837 784 A (VINCENT GARY ALLEN) 17 November 1998 (1998-11-17) * column 1, line 7 - line 11 * * column 2, line 25 - line 29 * * claims 1,4-6 * | 1-14 | C08G77/06 C08G77/42 |
| A | EP 0 776 944 A (DOW CORNING TORAY SILICONE) 4 June 1997 (1997-06-04) * column 6, line 3 - line 5 * * claims 1,7 * | 1-14 | |
| A | DATABASE WPI Section Ch, Week 198320 Derwent Publications Ltd., London, GB; Class A26, AN 1983-47627K XP002155678 & JP 58 058519 A (NIPPON CONTACT LENS), 7 April 1983 (1983-04-07) * abstract * | 1-14 | |

TECHNICAL FIELDS
SEARCHED     (Int.Cl.7)

C08G

The present search report has been drawn up for all claims

| Place of search | Date of completion of the search | Examiner |
|---|---|---|
| BERLIN | 15 December 2000 | Hoepfner, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 00 11 9645

This annex lists the patent family members relating to the patent documents cited in the above-mentioned European search report.
The members are as contained in the European Patent Office EDP file on
The European Patent Office is in no way liable for these particulars which are merely given for the purpose of information.

15-12-2000

| Patent document cited in search report | | Publication date | Patent family member(s) | | Publication date |
|---|---|---|---|---|---|
| US 5837784 | A | 17-11-1998 | DE 69703369 D | | 30-11-2000 |
| | | | EP 0812870 A | | 17-12-1997 |
| | | | JP 10067856 A | | 10-03-1998 |
| EP 0776944 | A | 04-06-1997 | JP 9151326 A | | 10-06-1997 |
| | | | DE 69601351 D | | 25-02-1999 |
| | | | DE 69601351 T | | 26-08-1999 |
| | | | US 5665805 A | | 09-09-1997 |
| JP 58058519 | A | 07-04-1983 | JP 1491073 C | | 07-04-1989 |
| | | | JP 63039047 B | | 03-08-1988 |

EPO FORM P0459

For more details about this annex : see Official Journal of the European Patent Office, No. 12/82